# FASCICULE DE BREVET EUROPEEN

(11) **EP 0 350 402 B1**
(45) Date de publication et mention de la délivrance du brevet: **03.11.1993**
(21) Numéro de dépôt: 89401947.0
(22) Date de dépôt: 06.07.1989
(51) Int. Cl.: H04Q 11/04, H04M 1/57

(54) **Micro-ordinateur intégrant une terminaison numérique d'abonné de réseau numérique à integration de services**
Personal-Computer, in den ein digitales ISDN-Teilnehmerendgerät integriert ist
Personal computer integrating a digital ISDN subscriber terminal

(30) Priorité: 08.07.1988 FR 8809352
(43) Date de publication de la demande: 10.01.1990
(73) Titulaire: JS TELECOM, F-78430 Louveciennes (FR)
(72) Inventeur: Picandet, Jean, F-75020 Paris (FR)
(74) Mandataire: Joly, Jean-Jacques

(56) Documents cités:
- EP-A- 0 192 894
- EP-A- 0 238 255
- IEEE/IEICE GLOBAL TELECOMMUNICATIONS CONFERENCE, Tokyo, 15-18 novembre 1987, pages 1757-1760, IEEE, New York, US; T.G. LAWELL: "Performance oriented controller for ISDN and SNA applications"

## Description

La présente invention vise à réaliser l'intégration, dans un micro-ordinateur, d'une Terminaison Numérique d'Abonné de Réseau Numérique à Intégration de Services.

Les micro-ordinateurs, ou ordinateurs personnels (PC), ont été initialement conçus pour le traitement des données.

Il a été proposé d'implanter dans un PC une carte électronique au format PC réalisant la fonction de carte d'interface ou d'adaptateur de terminal pour permettre le raccordement entre un poste téléphonique ou une station de travail et un réseau tel qu'un Réseau Numérique à Intégration de Services (RNIS) De telles cartes électroniques sont décrites notamment dans les documents suivants :
- un article de J. Jaggernauth et al intitulé "ISDN attendant console" paru dans "IEEE INTERNATIONAL CONFERENCE ON COMMUNICATIONS 1986", Conference Record, vol. 2, p. 1247-1249,
- un article de D. Adolphs et al intitulé "Subsets, terminals, and terminal adapters for the public ISDN" paru dans "ELECTRICAL COMMUNICATION", vol. 61, n° 1, 1987, p. 72-80,
- un article de J.-L. Lavoisard et al intitulé "Les installations terminales d'abonnés" paru dans " COMMUTATION ET TRANSMISSION", vol. 9, n° 3, sep. 1987, p. 35-50,
- le brevet US 4 640 989, et
- un article de B. Newman intitulé "An ISDN data and voice terminal based on a personal computer", paru dans "GLOBECOM'85-IEEE GLOBAL TELECOMMUNICATIONS CONFERENCE " Conference Record, vol. 3, p. 1048-1052.

Ces cartes électroniques n'assurent aucune fonction de commutation. Il en est de même pour des cartes électroniques destinées à associer un PC à un poste téléphonique numérique, l'un de ces deux éléments étant relié à un commutateur (PBX), comme décrit dans un article de K. Pederson et al, intitulé "The PC/PBX connection" paru dans "AT & T TECHNOLOGY, vol. 1, n° 1, 1986, p. 36-37.

Or, il existe depuis peu des Terminaisons Numériques d'Abonnés (TNA) de RNIS qui se raccordent au réseau public par une ou plusieurs interfaces T. Ces TNA (également connues sous l'appellation Régies d'Abonnés) sont à même de raccorder localement des terminaux téléphoniques ou de données en assurant notamment une fonction de commutation. Les TNA se présentent donc comme des autocommutateurs privés du type Intercom ou PABX ("Private Automatic Branch eXchange") assurant à la fois la commutation de la parole et celle des données. Une description de TNA est donnée dans l'article de J.-L. Lavoisard et al cité plus haut.

Il a certes été proposé d'intégrer une fonction de PABX dans un PC. Ainsi, la demande de brevet EP 0 192 894 montre un micro-ordinateur dans lequel est insérée une carte électronique avec des circuits d'interface de lignes, un circuit d'interface d'opérateur et un circuit contrôleur de PABX interconnectés par un bus de la carte. Le contrôleur de PABX est relié au bus du micro-ordinateur.

Avec cette disposition, la réalisation de la fonction téléphonique utilise largement les ressources du micro-ordinateur. Ainsi, la gestion de la fonction téléphonique, notamment la commutation d'informations transmises sur les lignes, est gérée en partage de temps par l'unité centrale du micro-ordinateur. Il existe par conséquent des risques de perturbation par des applications autres que la fonction téléphonique et non encore parfaitement au point : écriture dans des zones mémoire incorrectes, occupation abusive des organes communs (processeur, mémoires). De plus, un bus commun est utilisé tant pour la fonction téléphonique que pour les autres applications mises en oeuvre par le micro-ordinateur. Il existe donc un risque d'occupation du bus par les autres applications au détriment des échanges nécessaires à la fonction téléphonique. De plus encore, l'implantation de circuits utiles à la fonction téléphonique sur une seule carte augmente la sensibilité aux pannes et est incompatible avec une bonne modularité.

Ces mêmes inconvénients se retrouvent avec les solutions proposées par les documents DE 3 534 918 et JP 58-69 193 puisque la fonction de commutation téléphonique y est également assurée par le processeur central du micro-ordinateur.

Ainsi, la présente invention a-t-elle pour but de réaliser une intégration de TNA de RNIS dans un PC évitant les inconvénients des solutions proposées dans les documents précités.

Ce but est atteint grâce à un micro-ordinateur qui comprend
- des premières cartes électroniques sur lesquelles sont implantés des premiers circuits réalisant des fonctions d'unité centrale du PC, de mémoires et d'entrées/sorties, et qui sont interconnectées par un premier bus, et
- au moins une deuxième carte électronique portant notamment des circuits d'interface pour le raccordement d'une pluralité de terminaux à un RNIS par l'intermédiaire de liaisons,
- des moyens étant prévus pour réaliser la commutation d'informations transmises sur lesdites liaisons de manière à constituer une TNA du RNIS intégrée au micro-ordinateur, micro-ordinateur dans lequel, conformément à l'invention, la gestion et la commutation des informations transmises sur lesdites liaisons, et de la signalisation nécessaire à ces échanges d'information, sont réalisées au moyen de circuits de gestion et de commutation implantés dans la ou les deuxièmes cartes électroniques, de sorte que la fonction de TNA est réalisée sans faire appel aux ressources de l'unité centrale du micro-ordinateur.

Ainsi, la fonction essentielle de commutation téléphonique est-elle réalisée sans faire appel à l'unité centrale du PC, mais l'intégration de la TNA dans le PC permet de bénéficier des fonctions informatiques apportées par celui-ci, avec un minimum de matériel et pour un maximum de fonctionnalités.

Il est en particulier possible de confier au PC des tâches qui, même si elles ne sont pas essentielles pour le fonctionnement de la téléphonie, apportent bon nombre de facilités à l'exploitant. A titre indicatif, les tâches susceptibles d'être accomplies par le PC sont la facturation détaillée de la taxation, le journal des communications, les mesures de trafic, l'annuaire, la configuration et la maintenance de l'installation, la conversion de protocoles, ...

Les circuits réalisant les fonctions de la TNA sont implantés sur plusieurs deuxièmes cartes électroniques qui sont avantageusement interconnectées par un deuxième bus distinct du premier bus du PC. De la sorte, les échanges de données entre cartes de la TNA et la partie de la commande du PC utilisent le premier bus du PC, tandis que les échanges entre cartes de la TNA concernant l'exploitation téléphonique, et la commutation téléphonique, notamment, utilisent préférentiellement le deuxième bus.

Le deuxième bus comprend une ou plusieurs liaisons regroupant des canaux de transmission d'information dont au moins un est utilisé comme canal de signalisation. Les liaisons de transmission d'informations sont par exemple des liaisons de type MIC (codage par modulation d'impulsions) transportant chacune un multiplex temporel de canaux synchrones. En outre, le deuxième bus comprend avantageusement une liaison d'alimentation spécifique et une liaison de distribution de base de temps spécifique. Ainsi, la fonction téléphonique continue à être assurée en cas d'arrêt du PC.

La collision de signaux sur le canal de signalisation est évitée en utilisant une procédure d'accès à celui-ci conformément à un protocole de contention tel que CSMA/CR ou CSMA/CD, ou en dotant le deuxième bus d'une liaison d'arbitrage de l'utilisation du canal de signalisation entre les différentes deuxièmes cartes.

D'autres particularités et avantages de l'invention ressortiront à la lecture de la description faite ci-après, à titre indicatif mais non limitatif, en référence aux dessins annexés sur lesquels :
- la figure 1 est un schéma fonctionnel montrant l'intégration dans un PC d'une TNA de RNIS selon un mode particulier de réalisation de l'invention,
- la figure 2 est un vue éclatée montrant un exemple d'implantation physique dans un PC de cartes électroniques d'une TNA de RNIS, et
- la figure 3 est un schéma plus détaillé d'un circuit d'équipement de ligne.

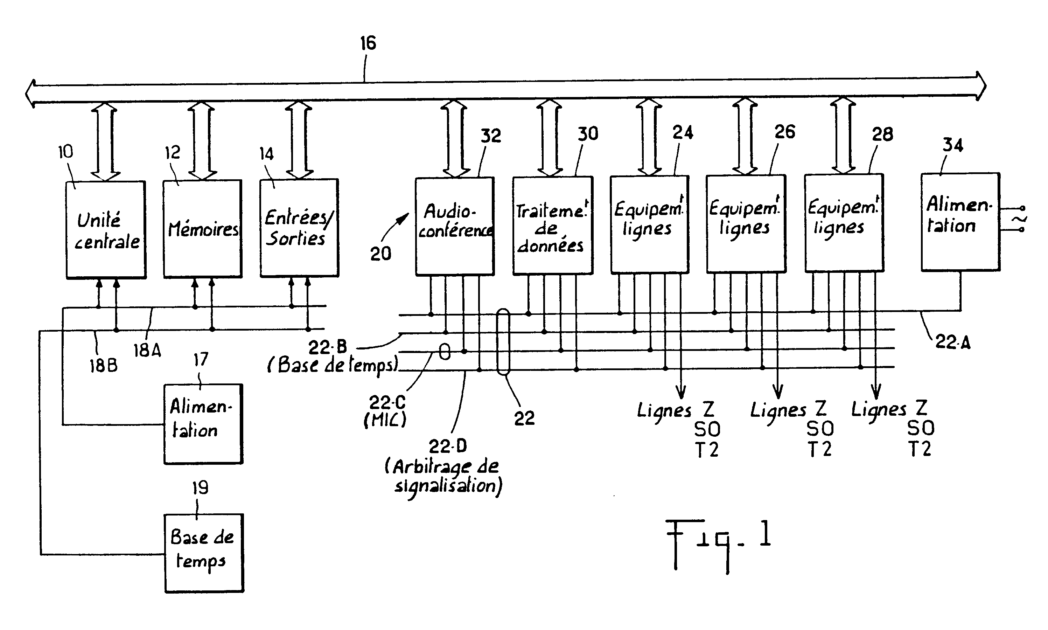

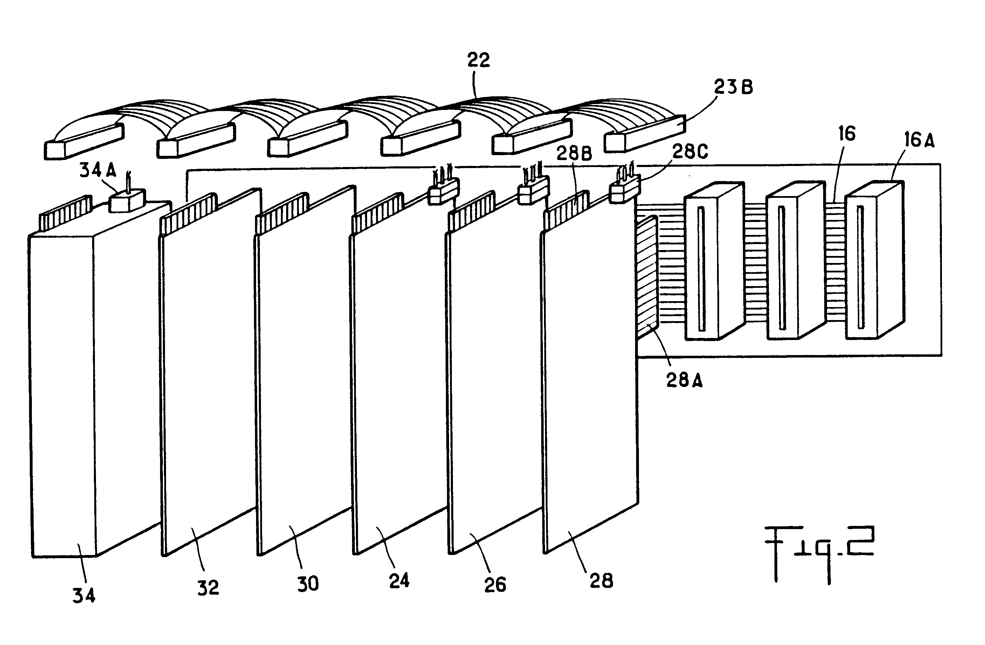

Le PC dont le schéma fonctionnel est illustré par la figure 1 comprend, de façon classique, un circuit 10 d'unité centrale, des circuits 12 de mémoires ROM (programmes) et RAM (données) et des circuits 14 d'entrées/sorties assurant les liaisons avec des organes extérieurs au PC, tels qu'un écran-clavier et une imprimante (non représentés). Ces différents circuits sont implantés sur différentes cartes électroniques (non représentées sur la figure 2), et sont interconnectés par un bus parallèle commun 16. Une liaison 18A assure la distribution aux circuits 10, 12 et 14 de l'énergie électrique provenant d'une source 17 tandis qu'une liaison 18B assure la distribution à ces mêmes circuits de signaux d'horloge provenant d'une base de temps 19.

Conformément à l'invention, le PC comprend en outre des circuits formant une TNA 20 de RNIS et implantés sur des cartes électroniques au format PC, ces circuits étant destinés à gérer les fonctions de téléphonie et de transmission de données dans un environnement RNIS.

Les circuits formant la TNA sont, d'une part, connectés sur le bus parallèle 16 du PC et, d'autre part, interconnectés par un bus de communication 22, qui est distinct du bus 16 et au moyen duquel sont acheminés les échanges concernant l'exploitation téléphonique et la commutation téléphonique, notamment.

La TNA 20 comprend notamment des circuits 24, 26, 28 d'équipement de lignes, des circuits 30 de traitement de données et des circuits 32 d'audioconférence.

Les circuits d'équipement de ligne permettent le raccordement de lignes téléphoniques, comme dans un autocommutateur classique, pour relier une pluralité de terminaux locaux entre eux et au RNIS. Ces circuits peuvent présenter des interfaces Z analogiques et/ou des interfaces RNIS, notamment de type U, T0, T2, S0, S2. Dans l'exemple illustré, les circuits 24, 26, 28 présentent des interfaces de type Z, S0 et T2.

Comme le montre la figure 2, les circuits 24, 26, 28 sont implantés sur des cartes électroniques. Chacune de ces cartes, par exemple la carte 28, comprend un premier ensemble de contacts 28A destinés à être enfichés dans un connecteur 16A pour le raccordement au bus parallèle 16 du PC, un deuxième ensemble de contacts 28B destinés à être enfichés dans un connecteur 23B pour le raccordement au bus de communication 22, et une borne 28C de départ de lignes vers les terminaux locaux ou le RNIS.

Les circuits 30 de traitement de données servent de passerelles entre les bus 16 et 22. Par exemple, ces circuits peuvent recevoir des informations par le bus parallèle 16 du PC, mettre ces informations en paquets de données en série pour les transmettre aux circuits d'équipement de lignes via le bus 22. Inversement, les circuits de traitement de données peuvent recevoir via le bus 22 des paquets de données et les mettre sous forme convenable pour transmission aux circuits du PC proprement dit.

Les circuits d'audioconférence 32 permettent des additions de signaux vocaux pour assurer des conférences à trois personnes ou plus. Ces circuits sont par exemple tels que décrits dans la demande de brevet FR 87 10 902 du 31 juillet 1987. Les circuits d'audioconférence 32 sont essentiellement reliés au bus de communication 22 afin d'effectuer les additions de signaux vocaux entre les voies temporelles concernées par les conférences.

Comme le montre la figure 2, les circuits 30 de traitements de données et les circuits 32 d'audioconférence sont implantés sur des cartes connectées aux bus 16 et 22.

Avec l'architecture décrite ci-dessus, les échanges de données entre circuits de la TNA 20 et la partie de commande du PC utilisent le bus 16 du PC tandis que les échanges concernant l'exploitation téléphonique RNIS, et notamment la commutation téléphonique, utilisent essentiellement le bus 22.

Afin que la fonction téléphonique reste indépendante du reste des fonctions du PC, le bus 22 comprend :
- une liaison spécifique 22-A de distribution d'alimentation électrique,
- une liaison spécifique 22-B de distribution de base de temps,
- une ou plusieurs liaisons MIC 22-C qui transportent chacune un multiplex de canaux synchrones à 64 kbits/s, l'un de ces canaux étant utilisé pour constituer un canal unique de signalisation de débit 64 kbits/s ou n X 64 kbits/s (n étant un nombre entier supérieur ou égal à 1),
- et éventuellement une liaison d'arbitrage pour l'accès au canal de signalisation.

L'alimentation électrique distribuée par la liaison 22-A est fournie par un circuit d'alimentation 34 indépendant du circuit d'alimentation 17 du PC pour pouvoir fonctionner en cas d'arrêt du PC. De préférence, le circuit d'alimentation 34 est secouru par batterie. Comme le montre la figure 2, le circuit 34 est implanté sur une carte particulière reliée au bus 22 et ayant une borne 34A de raccordement au réseau électrique l'alimentant.

La fonction de base de temps est par exemple réalisée comme décrit dans la demande de brevet FR 87 15 511 du 9 novembre 1987. Les signaux fournis par la base de temps sont engendrés par l'un des circuits d'équipement de lignes de la TNA, indépendamment du circuit 19, et sont transmis aux autres circuits de la TNA via la liaison 22-B.

Les liaisons MIC 22-C servent aux transferts d'informations (données ou parole) entre les circuits de la TNA, ainsi que, au moyen de l'une d'entre elles formant canal de signalisation, aux échanges de signalisation téléphonique, la signalisation avec la partie informatique du PC empruntant le bus 16 du PC qui est prévu pour cette fonction.

Deux types de messages téléphoniques peuvent être utilisés :
- les messages adressés, pour les échanges d'un circuit à un autre circuit de la TNA, et
- les message diffusés, émis par un des circuits de la TNA et reçus par les autres.

Seul un message peut être émis à la fois sur le canal de signalisation, pour éviter les collisions de signaux. A cet effet, la procédure d'accès au canal de signalisation est de préférence conforme à un protocole CSMA/CR (Collision Resolution) utilisant l'adresse de chaque circuit. Suivant ce protocole, s'il y a tentative d'émission simultanée de deux circuits, celui ayant l'adresse la plus élevée peut seul émettre, l'autre se trouvant bloqué pendant l'émission du message et étant obligé d'émettre ultérieurement.

Une procédure anti-collision selon un autre protocole de contention, par exemple CSMA/CD (Collision Detection) peut également être utilisée.

Les circuits capables de gérer des protocoles de contention sont bien connus. A titre d'exemple, on peut citer le composant "SAB 82525 HSCX" de la société SIEMENS.

La collision de signaux sur le canal de signalisation peut encore être évitée en prévoyant une liaison d'arbitrage 22-D (figure 1) dans le bus 22.

En variante, les liaisons 22-C transmettant les informations peuvent être de type asynchrone, les informations étant véhiculées par paquets, qu'il s'agisse de données, de parole numérisée, ou de signalisation.

Avantageusement encore, chacun des circuits de la TNA 20 décrits plus haut possède sa propre "intelligence" et ses propres bases de données, ce qui autorise une gestion décentralisée des différentes fonctions de la TNA.

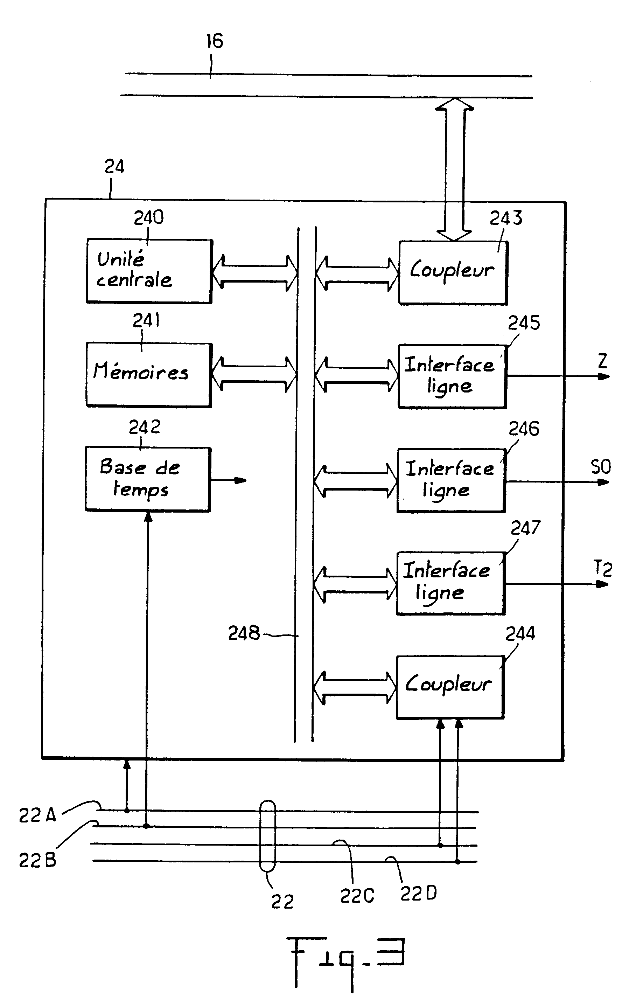

Ainsi, comme le montre la figure 3, chaque circuit, par exemple 24, possède en propre une unité centrale 240, des mémoires 241 associées à l'unité centrale, une base de temps synchronisable 242 reliée à la liaison 22-B, et des coupleurs 243, 244 avec chacun des deux bus 16 et 22. Dans l'exemple illustré, le circuit d'équipement de ligne possède des interfaces 245, 246, 247 de types Z, S0 pour le raccordement à des terminaux et T2 pour le raccordement au RNIS, et peut ainsi constituer une TNA autonome. L'unité centrale 240, les mémoires 241, les coupleurs 243, 244 et les interfaces de ligne 245, 246, 247 sont interconnectés par un bus 248 propre à la carte.

La synthèse d'une TNA de plus grande capacité utilisant plusieurs de ces cartes est obtenue par des échanges de signalisation entre circuits utilisant le canal spécialisé du bus 22. Avec une telle disposition, le bon fonctionnement de la TNA 20 n'est pas tributaire d'une unité centrale commune, de sorte qu'un défaut quelconque apparaissant dans la TNA ne pourra causer au système qu'une perturbation localisée.

Comme déjà indiqué, l'intégration de la TNA 20 dans un PC permet de tirer profit des ressources informatiques du PC pour confier à celui-ci un certain nombre de tâches telles que la facturation de la taxation, la fabrication de journaux de communications et de mesure de trafic, la conversion de protocoles, la configuration de l'installation (notamment la configuration des circuits d'audioconférence) la maintenance, la mémorisation d'annuaires, etc.

Bien entendu, des circuits ou cartes constitutifs d'une TNA de RNIS et autres que ceux décrits ci-avant pourront également être intégrés dans le PC.

## Revendications

1. Micro-ordinateur comprenant
- des premières cartes électroniques (10, 12, 14) sur lesquelles sont implantés des premiers circuits réalisant des fonctions d'unité centrale, de mémoires et d'entrées/sorties, et qui sont interconnectées par un premier bus (16), et
- des deuxièmes cartes électroniques (24, 26, 28, 30, 32) portant notamment des circuits d'interface pour le raccordement d'une pluralité de terminaux à un Réseau Numérique à Intégration de Services (RNIS) par l'intermédiaire de liaisons,
- des moyens étant prévus pour réaliser la commutation d'informations transmises sur lesdites liaisons de manière à constituer une Terminaison Numérique d'Abonné (TNA) du RNIS intégrée au micro-ordinateur,
caractérisé en ce que la gestion et la commutation des informations transmises sur lesdites liaisons, et de la signalisation nécessaire à ces échanges d'information, sont réalisées au moyen de circuits de gestion et de commutation implantés dans les deuxièmes cartes électroniques (24, 26, 28, 30, 32), de sorte que la fonction de TNA est réalisée sans faire appel aux ressources de l'unité centrale du micro-ordinateur, et en ce que les deuxièmes cartes électroniques sont, d'une part, connectées audit premier bus (16) pour communiquer par l'intermédiaire de celui-ci avec les premiers circuits du micro-ordinateur et, d'autre part, interconnectées par l'intermédiaire d'un deuxième bus (22) distinct du premier.

2. Micro-ordinateur selon la revendication 1, caractérisé en ce que le deuxième bus (22) comprend au moins une liaison regroupant des canaux de transmission d'informations dont au moins un constitue un canal de signalisation téléphonique.

3. Micro-ordinateur selon la revendication 2, caractérisé en ce que les canaux de transmission d'information portent des voies temporelles.

4. Micro-ordinateur selon l'une quelconque des revendications 2 et 3, caractérisé en ce que l'accès au canal de signalisation est conforme à un protocole de contention ou est arbitré.

5. Micro-ordinateur selon l'une quelconque des revendications 1 à 4, caractérisé en ce que le deuxième bus (22) comprend une liaison (22-A) de distribution d'alimentation électrique indépendante, l'alimentation électrique des premiers circuits du micro-ordinateur étant réalisée par une autre liaison (18A) de distribution d'alimentation.

6. Micro-ordinateur selon l'une quelconque des revendications 1 à 5, caractérisé en ce que le deuxième bus (22) comprend une liaison de distribution de base de temps indépendante (22-B), la fourniture d'une base de temps aux premiers circuits du micro-ordinateur étant réalisée par une autre liaison de distribution de base de temps (18B).

7. Micro-ordinateur selon l'une quelconque des revendications 1 à 6, caractérisé en ce que les circuits de gestion et de commutation d'informations et de signalisation sont répartis sur les deuxièmes cartes électroniques (24, 26, 28, 30, 32), et chaque deuxième carte électronique comporte en propre une unité centrale avec ses mémoires associées, des moyens de couplage avec le premier bus du micro-processeur et avec le deuxième bus, et des circuits d'interface de lignes.

## Claims

1. A micro-computer comprising
- first electronic boards (10, 12, 14) incorporating first circuits serving as a central unit, memories and inputs/outputs and interconnected by a first bus (16) and
- second electronic boards (24, 26, 28, 30, 32) inter alia bearing interface circuits for connecting a number of terminals to an Integration of Services Digital Network (ISDN) via connections,
- means being provided for switching information transmitted along the aforementioned connections so as to form a Subscriber's Digital Terminal (SDT) of the ISDN incorporated in the micro-computer,
characterised in that the information transmitted via the aforementioned connections and the signalling necessary for the exchanges of information are managed and switched by management and switching circuits incorporated in the second electronic boards (24, 26, 28, 30, 32) so that the SDT operates without using the resources of the micro-computer central unit, and the second electronic boards are on the one hand connected to the first bus (16) so as to communicate thereby with the first micro-computer circuits and on the other hand are interconnected by a second bus (22) different from the first.

2. A micro-computer according to claim 1, characterised in that the second bus (22) comprises at least one connection for pooling of data transmission channels, at least one of which is a telephone signalling channel.

3. A micro-computer according to claim 2, characterised in that the data transmission channels carry time channels.

4. A micro-computer according to claim 2 or 3, characterised in that access to the signalling channel is in accordance with a disputes routine or is arbitrated.

5. A micro-computer according to any of claims 1 to 4, characterised in that the second bus (22) comprises an independent electric supply distribution connection (22-A), the first circuits of the micro-computer being energised by a different supply distribution connection (18A).

6. A micro-computer according to any of claims 1 to 5, characterised in that the second bus (22) comprises an independent time-base distribution connection (22-B), whereas the first circuits of the micro-computer are supplied with a time base by a different time-base distribution connection (18B).

7. A micro-computer according to any of claims 1 to 6, characterised in that the circuits for management and switching of data and signalling are distributed among the second electronic boards (22, 26, 28, 30, 32) and each second electronic board has a separate central unit with associated memories, means for coupling with the first micro-processor bus and with the second bus, and line interface circuits.

## Patentansprüche

1. Personal-Computer, bestehend aus
- ersten elektronischen Schaltungsplatten (10, 12, 14), auf denen erste Kreise angeordnet sind, die Funktionen einer Zentraleinheit, von Speichern und Eingängen/Ausgängen durchführen und die durch einen ersten Datenbus (16) verbunden sind,
- aus zweiten elektronischen Schaltungsplatten (24, 26, 28, 30, 32), die insbesondere Schnittstellenkreise für den Anschluß mehrerer ISDN-Teilnehmerendgeräte mittels Verbindungen haben, und
- Einrichtungen, die vorgesehen sind, um die Übertragung von Informationen, die auf diesen Verbindungen übertragen werden, derart durchzuführen, daß ein ISDN-Teilnehmerendgerät gebildet wird, das im PC integriert ist,
dadurch gekennzeichnet, daß die Führung und die Übertragung der auf diesen Verbindungen übertragenen Informationen und die für diesen Austausch von Informationen erforderliche Signalgebung mittel Führungs- und Übertragungskreisen erfolgt, die auf den zweiten elektronischen Schaltungsplatten (24, 26, 28, 30, 32) derart angeordnet sind, daß die Funktion des Teilnehmerendgeräts ohne Anforderung an die Quellen der Zentraleinheit des PC durchgeführt wird, und daß die zweiten elektronischen Schaltungplatten einerseits mit dem ersten Bus (16) zur Übertragung mittels dieses zu den ersten Kreisen des PC verbunden und andrerseits mittels eines zweiten Busses (22), der vom ersten verschieden ist, miteinander verbunden sind.

2. PC nach Anspruch 1, dadurch gekennzeichnet, daß der zweite Bus (22) wenigstens eine Verbindung aufweist, die Informationsübertragunskanäle gruppiert, von denen wenigstens einer einen Fernsprech-Signalgebungkanal bildet.

3. PC nach Anspruch 2, dadurch gekennzeichnet, daß die Informationsübertragungskanäle temporäre Wege bilden.

4. PC nach Anspruch 2 oder 3, dadurch gekennzeichnet, daß der Zugriff zum Signalgebungskanal mit einem Konkurrenzbetriebsprotokoll konform ist oder einem Entscheidungsvorgang unterworfen wird.

5. PC nach einem der Ansprüche 1 bis 4, dadurch gekennzeichnet, daß der zweite Bus (22) eine unabhängige Verbindung zur Versorgung mit elektrischer Energie aufweist, wobei die elektrische Versorgung der ersten Kreise des PC mittels einer weiteren Versorgungsverbindung (18A) erfolgt.

6. PC nach einem der Ansprüche 1 bis 5, dadurch gekennzeichnet, daß der zweite Bus (22) eine unabhängige Verbindung (22-B) zur Verteilung des Taktsignals aufweist, wobei die Übertragung des Taktsignals zu den ersten Kreisen des PC durch eine weitere Verbindung (18B) zur Verteilung des Taktsignals erfolgt.

7. PC nach einem der Ansprüche 1 bis 6, dadurch gekennzeichnet, daß die Informationsführungs- und - übertragungs- und Signalgebungskreise auf zwei elektronische Schaltungsplatten (24, 26, 28, 30, 32) verteilt sind, und daß jede zweite elektronische Schaltungsplatte eine eigene Zentraleinheit mit ihren zugehörigen Speichern, Einrichtungen zur Verbindung mit dem ersten Bus des PC und dem zweiten Bus und Leitungsschnittstellenkreise aufweist.
